(19) Europäisches Patentamt / European Patent Office / Office européen des brevets

(11) **EP 4 102 087 B1**

(12) **EUROPEAN PATENT SPECIFICATION**

(45) Date of publication and mention of the grant of the patent:
**25.02.2026  Bulletin 2026/09**

(21) Application number: **22173518.6**

(22) Date of filing: **16.05.2022**

(51) International Patent Classification (IPC):
*F16C 17/02* (2006.01)          *F16C 33/12* (2006.01)
*F16C 33/06* (2006.01)

(52) Cooperative Patent Classification (CPC):
**F16C 17/02; F16C 33/06; F16C 33/12;**
F16C 2202/04; F16C 2240/54

(54) **SLIDING MEMBER, PRODUCTION METHOD OF SLIDING MEMBER, AND EVALUATION METHOD OF SLIDING MEMBER**

GLEITELEMENT, VERFAHREN ZUR HERSTELLUNG EINES GLEITELEMENTS UND VERFAHREN ZUR BEURTEILUNG EINES GLEITELEMENTS

ÉLÉMENT COULISSANT, PROCÉDÉ DE PRODUCTION D'UN ÉLÉMENT COULISSANT ET PROCÉDÉ D'ÉVALUATION DE ÉLÉMENT COULISSANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **11.06.2021   JP 2021098028**

(43) Date of publication of application:
**14.12.2022   Bulletin 2022/50**

(73) Proprietor: **KABUSHIKI KAISHA KOBE SEIKO SHO (KOBE STEEL, LTD.)**
**Hyogo 651-8585 (JP)**

(72) Inventors:
• **OBAYASHI, Yuma**
  **Hyogo, 676-8670 (JP)**
• **MATSUDA, Mariko**
  **Hyogo, 676-8670 (JP)**

(74) Representative: **Müller-Boré & Partner**
**Patentanwälte PartG mbB**
**Friedenheimer Brücke 21**
**80639 München (DE)**

(56) References cited:
**EP-A1- 3 767 119          US-A- 5 161 898**
**US-A1- 2020 256 277**

**Description**

BACKGROUND OF THE INVENTION

Field of Invention

The present invention relates to a sliding member, a production method of a sliding member, and an evaluation method of a sliding member.

Description of the Related Art

A shaft member such as a crankshaft, an intermediate shaft, a propulsion shaft, or the like for ship is slidably supported by a bearing member such as a slide bearing or the like. Furthermore, a lubricating liquid is supplied to a gap between the shaft member and the bearing member. The lubricating liquid forms a lubricating film between the shaft member and the bearing member to inhibit a seizure therebetween. Meanwhile, even in a case in which the lubricating film is formed between the shaft member and the bearing member, if the surface roughness of the shaft member and the bearing member is high as compared with the thickness of the lubricating film, a possibility of a seizure between these members is increased.

Thus, it is effective to reduce the surface roughness of a sliding face in order to inhibit a seizure of the shaft member and/or the like. For example, Patent Document 1 discloses a combined sliding member adapted to a reduction in friction of an internal combustion engine. Patent Document 2 discloses a further improved sliding member according to the preamble of claim 1.

Prior Art Documents

Patent Documents

Patent Document 1: Japanese Unexamined Patent Application, Publication No. 2004-116707 Patent Document 2: EP 3 767 119 A1

SUMMARY OF THE INVENTION

In producing a sliding member comprising a large shaft member, a sliding face of the shaft member may be manually polished after mechanical processing for the purpose of achieving sufficient dimension accuracy. The sliding face which has been manually polished may have an increased radius of curvature of roughness projections, and thus it may be likely that a seizure occurs on the sliding face. Meanwhile, in the sliding member disclosed in Patent Document 1, the radius of curvature of roughness projections on the sliding face is not sufficiently considered, and thus it may be difficult to sufficiently inhibit a seizure of the sliding face.

The present invention was made in view of the foregoing circumstances, and an object of the present invention is to provide a sliding member which enables inhibition of a seizure on a sliding face.

A sliding member according to one aspect of the present invention made to solve the aforementioned problems comprises: a shaft member having a first sliding face; and a bearing member having a second sliding face which slidably supports the first sliding face, wherein the first sliding face and the second sliding face differ in hardness, and a roughness parameter $R_{ac}$ calculated according to formula 1 is less than or equal to 0.276.

$$R_{ac} = \delta + 4\sigma - \left(\frac{20}{1.045 \times 10^{-4}\sigma^{-4.3}\beta^{1.5}\eta^2 E^*}\right)^{0.147} \quad \cdots 1$$

In the formula 1, $\delta$ represents a value [$\mu$m] calculated according to formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face.

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

Effects of the Invention

The sliding member according to the one aspect of the present invention enables inhibition of a seizure on the sliding face.

BRIEF DESCRIPTION OF THE DRAWINGS

FIG. 1 is a schematic cross-sectional view illustrating a section perpendicular to a central axis of a shaft member in a sliding member according to an embodiment of the present invention.
FIG. 2 is a flowchart illustrating a production method of a sliding member according to an embodiment of the present invention.
FIG. 3 is a flowchart illustrating an evaluation method of a sliding member according to an embodiment of the present invention.

DESCRIPTION OF THE PREFERRED EMBODIMENTS

Description of Embodiments of the Present Invention

Firstly, embodiments of the present invention are listed and described.
A sliding member according to one aspect of the present invention comprises: a shaft member having a first sliding face; and a bearing member having a second sliding face which slidably supports the first sliding face, wherein the first sliding face and the second sliding face differ in hardness, and a roughness parameter $R_{ac}$ calculated according to the following formula 1 is less than or equal to 0.276.

$$R_{ac} = \delta + 4\sigma - \left(\frac{20}{1.045 \times 10^{-4} \sigma^{-4.3} \beta^{1.5} \eta^2 E^*}\right)^{0.147} \qquad \cdots 1$$

In the formula 1, $\delta$ represents a value [μm] calculated according to the following formula 2 in a case in which an average value of heights of roughness projection apices of the first sliding face is denoted by $\delta_A$ [μm], and an average value of heights of roughness projection apices of the second sliding face is denoted by $\delta_B$ [μm]; $\sigma$ represents a value [μm] calculated according to the following formula 3 in a case in which a root mean square of the heights of the roughness projection apices of the first sliding face is denoted by $\sigma_A$ [μm], and a root mean square of the heights of the roughness projection apices of the second sliding face is denoted by $\sigma_B$ [μm]; $\eta$ represents a value [μm$^{-2}$] calculated according to the following formula 4 in a case in which a roughness projection density per unit area of the first sliding face is denoted by $\eta_A$ [μm$^{-2}$], and a roughness projection density per unit area of the second sliding face is denoted by $\eta_B$ [μm$^{-2}$]; $\beta$ represents a median [μm] of radius of curvature of roughness projections in an entirety of the first sliding face and the second sliding face; and $E^*$ represents an equivalent longitudinal elastic modulus [GPa] of the first sliding face and the second sliding face.

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

Typically, a roughness contact stress $P_a$ [GPa] between two sliding faces is calculated according to the following formula 5 using a model of Greenwood-Tripp, in a case in which a distance between the sliding faces is denoted by h [μm]. Furthermore, h is represented by the following formula 6 based on the following formula 5. In a case in which a limit roughness contact stress at which a seizure occurs is denoted by $P_{lim}$ [GPa], under a condition in which $P_a = P_{lim}$ is satisfied in the following formula 6, h is represented by the following formula 7 as a distance $h_{lim}$ between the sliding faces which is a limit of occurrence of a seizure. The distance $h_{lim}$ is determined by only roughness characteristics and material properties of the two sliding faces, and thus $h_{lim}$ can be defined as the roughness parameter $R_{ac}$. Accordingly, the sliding member enables inhibition of a seizure on the sliding face by controlling the roughness parameter $R_{ac}$ in the formula 1 obtained by setting $P_{lim}$ to an appropriate value, to be less than or equal to the above value.

$$P_a = \frac{8\sqrt{2}\,\pi}{15}(\sigma\beta\eta)^2 \sqrt{\frac{\sigma}{\beta}} E^* \left\{ 4.4086 \times 10^{-5} \left( 4 - \frac{h-\delta}{\sigma} \right)^{6.804} \right\} \qquad \cdots 5$$

$$h = \delta + 4\sigma - \left( \frac{P_a}{1.045 \times 10^{-4}\sigma^{-4.3}\beta^{1.5}\eta^2 E^*} \right)^{0.147} \qquad \cdots 6$$

$$h_{lim} = \delta + 4\sigma - \left( \frac{P_{lim}}{1.045 \times 10^{-4}\sigma^{-4.3}\beta^{1.5}\eta^2 E^*} \right)^{0.147} \qquad \cdots 7$$

Furthermore, since the first sliding face and the second sliding face of the sliding member differ in hardness, in a case in which the first sliding face comes into contact with the second sliding face, microscopic projections on a surface having a higher hardness of these sliding faces are likely to be maintained. On the other hand, a surface having a lower hardness of the first sliding face and the second sliding face is easily plastically deformed. Thus, in the sliding member, the sliding face having a lower hardness can be polished by the contact between the first sliding face and the second sliding face, and it is easy to control the roughness parameter $R_{ac}$ to be less than or equal to the lower limit.

The roughness parameter $R_{ac}$ is preferably calculated such that, of the first sliding face and the second sliding face, the sliding face having a lower hardness is defined as a mirror surface having no roughness projection. In the sliding member, by regarding, of the first sliding face and the second sliding face, the sliding face having a lower hardness as a mirror surface having no roughness projection, $R_{ac}$ in the formula 1 can be calculated more easily.

A lubricating liquid is preferably supplied between the first sliding face and the second sliding face. By thus supplying the lubricating liquid between the first sliding face and the second sliding face, a seizure on the sliding face can be further inhibited.

A shaft diameter of the first sliding face of the shaft member may be greater than or equal to 180 mm. In a shaft member having a large diameter in which the shaft diameter of the first sliding face is greater than or equal to the lower limit value, it may be desirable that the first sliding face is manually polished. Even in such a case, the sliding member enables easy inhibition of a seizure on the sliding face.

It is preferred that δ is less than or equal to 0.232, and σ is less than or equal to 0.209. Setting δ and σ to be less than or equal to the respective upper limit values enables easy inhibition of a seizure on the sliding face.

An other aspect of the present invention is a production method of a sliding member comprising: a shaft member having a first sliding face; and a bearing member having a second sliding face which slidably supports the first sliding face, wherein the first sliding face and the second sliding face differ in hardness, the production method comprising: a smoothing step of smoothing, of the first sliding face and the second sliding face, a sliding face having a higher hardness such that a roughness parameter $R_{ac}$ calculated according to the following formula 1 is less than or equal to 0.276.

$$R_{ac} = \delta + 4\sigma - \left( \frac{20}{1.045 \times 10^{-4}\sigma^{-4.3}\beta^{1.5}\eta^2 E^*} \right)^{0.147} \qquad \cdots 1$$

In the formula 1, $\delta$ represents a value [$\mu$m] calculated according to the following formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to the following formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to the following formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face.

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

According to the production method of a sliding member, by smoothing in the smoothing step, of the first sliding face and the second sliding face, the sliding face having a higher hardness such that the roughness parameter $R_{ac}$ in the formula 1 is less than or equal to the above value, a sliding member which enables inhibition of a seizure on a sliding face can be produced.

An other aspect of the present invention is an evaluation method of a sliding member comprising: a shaft member having a first sliding face; and a bearing member having a second sliding face which slidably supports the first sliding face, the evaluation method comprising: an evaluating step of evaluating a possibility of occurrence of a seizure between the first sliding face and the second sliding face based on a roughness parameter $R_{ac}$ calculated according to the following formula 1.

$$R_{ac} = \delta + 4\sigma - \left( \frac{20}{1.045 \times 10^{-4} \sigma^{-4.3} \beta^{1.5} \eta^2 E^*} \right)^{0.147} \qquad \cdots 1$$

In the formula 1, $\delta$ represents a value [$\mu$m] calculated according to the following formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to the following formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to the following formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face.

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

According to the evaluation method of a sliding member, by evaluating in the evaluating step, the possibility of occurrence of a seizure between the first sliding face and the second sliding face based on the roughness parameter $R_{ac}$ in the formula 1, the possibility of occurrence of a seizure can be easily evaluated.

It is to be noted that in the present invention, the "roughness projection apices" are determined by the following procedure based on a roughness curve with a measured length of 4.0 mm which is measured at a cut-off value of 0.25 mm according to JIS-B0601 (2013). Firstly, an average line of the roughness curve is set according to JIS-B0601 (2013), and with the average line as a reference, heights of measurement points above the average line are defined as positive values, while heights of measurement points below the average line are defined as negative values. An average value of the heights of all the measurement points having positive values is denoted by Thr0. Next, of the measurement points on the roughness curve, a measurement point which is higher than measurement points adjacent thereto on both sides and has a height greater than -Thr0 is assumed to be a temporary apex. Of measurement points between temporary apices adjacent to each other, a measurement point having a smallest height is defined as a valley. Then, for all the temporary apices, height differences between a temporary apex and left and right valleys adjacent to the temporary apex are respectively determined; in a case in which either of these height differences is less than $0.2 \times$ Thr0, the corresponding temporary apex is excluded. As a result, remaining temporary apices are determined as roughness projection apices. It is to be noted that when straight lines are drawn toward a roughness projection apex from all the measurement points on a roughness curve which connects the roughness projection apex to a valley adjacent to the roughness projection apex, a measurement point having a largest gradient of the straight line is determined for each of the left and right sides of the roughness projection apex and defined as an end of the roughness projection apex.

In the present invention, a "height of a roughness projection apex" refers to a height of a roughness projection apex with the above-mentioned average line as a reference. The "average value of the heights of the roughness projection apices" as referred to herein means an arithmetic mean value of the heights of all the roughness projection apices on the roughness curve. The "root mean square of the heights of the roughness projection apices" as referred to herein means a square root of the arithmetic mean of squares of the heights of the roughness projection apices relative to the average value of the heights of all the roughness projection apices on the roughness curve.

In the present invention, the "radius of curvature of roughness projections" is calculated by the following procedure. Firstly, a roughness curve between both ends of each roughness projection apex is approximated by the method of least squares. Then, in a case in which a quadratic coefficient of a quadratic function obtained as a result of the approximation by the method of least squares is denoted by a, the radius of curvature of each roughness projection apex is calculated as -0.5/a. Furthermore, the "median of radius of curvature of roughness projections in an entirety of the first sliding face and the second sliding face" as referred to herein means a median of radius of curvature of all the roughness projection apices on the roughness curve of the first sliding face and the roughness curve of the second sliding face.

In the present invention, the "roughness projection density per unit area" refers to a density calculated as $(m/L)^2$ in a case in which a measured length of the roughness curve, i.e. a length of the horizontal axis of the roughness curve is denoted by L, and a number of roughness projection apices on the roughness curve is denoted by m.

In the present invention, the "equivalent longitudinal elastic modulus" refers to a value of E [GPa] calculated according to the following formula 8 in a case in which a Poisson's ratio of the first sliding face is denoted by $v_A$, a longitudinal elastic modulus of the first sliding face is denoted by $E_A$ [GPa], a Poisson's ratio of the second sliding face is denoted by $v_B$, and a longitudinal elastic modulus of the second sliding face is denoted by $E_B$ [GPa].

$$E^* = \frac{2}{\frac{(1-v_A^2)}{E_A} + \frac{(1-v_B^2)}{E_B}} \quad \cdots 8$$

In the present invention, that "a sliding face having a lower hardness is defined as a mirror surface having no roughness projection" means that the average value of the heights of the roughness projection apices, the root mean square of the heights of the roughness projection apices, and the roughness projection density per unit area of the sliding face having a lower hardness are converted to 0, and the median of radius of curvature of roughness projections in the entirety of the first sliding face and the second sliding face is converted to a median of radius of curvature of roughness projections on the sliding face having a higher hardness.

Details of Embodiments of the Present Invention

Hereinafter, embodiments of the present invention are described in detail with reference to the drawings.

Sliding Member

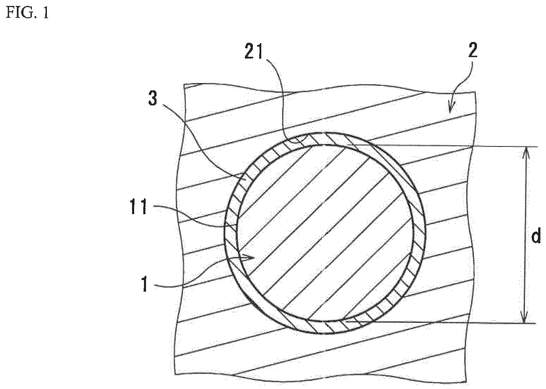

A sliding member in FIG. 1 is, for example, a sliding member for ship which is disposed on a ship. The sliding member comprises: a shaft member 1 having a first sliding face 11; and a bearing member 2 having a second sliding face 21 which slidably supports the first sliding face 11. The first sliding face 11 and the second sliding face 21 face each other. The second sliding face 21 surrounds an outer peripheral face of the first sliding face 11. A lubricating liquid 3 is supplied between the first sliding face 11 and the second sliding face 21.

Shaft Member

The shaft member 1 is a rotating body which rotates in a circumferential direction with respect to the bearing member 2. The shaft member 1 is exemplified by a crankshaft, an intermediate shaft, a propulsion shaft, and the like for ship. Examples of a material of the shaft member 1 include carbon steel, low-alloy steel, and the like.

A shaft diameter d of the first sliding face 11 is not particularly limited, and may be greater than or equal to 180 mm. Furthermore, the shaft diameter d of the first sliding face 11 may be greater than or equal to 280 mm, and may be greater than or equal to 360 mm. In the shaft member 1 having a large diameter in which the shaft diameter d of the first sliding face 11 is greater than or equal to the lower limit value, it may be desirable that the first sliding face 11 is manually polished. Even in such a case, the sliding member enables easy inhibition of a seizure between the first sliding face 11 and the second sliding face 21.

The upper limit of the shaft diameter d of the first sliding face 11 is preferably 1,500 mm, more preferably 1,400 mm, and still more preferably 1,300 mm. When the shaft diameter d of the first sliding face 11 is greater than the upper limit value, the sliding member becomes too large, and a demand for reduction in device size may be contradicted.

Bearing Member

The bearing member 2 is exemplified by a crank bearing, an intermediate bearing, a propulsion bearing, and the like for ship. Examples of a material of the bearing member 2 include white metal, trimetal, kelmet, aluminum alloy, and the like.

In the sliding member, the roughness parameter $R_{ac}$ which is calculated according to the following formula 1 and relates to the first sliding face 11 and the second sliding face 21 is less than or equal to 0.276.

$$R_{ac} = \delta + 4\sigma - \left(\frac{20}{1.045 \times 10^{-4} \sigma^{-4.3} \beta^{1.5} \eta^2 E^*}\right)^{0.147} \quad \cdots 1$$

In the formula 1, $\delta$ represents a value [$\mu$m] calculated according to the following formula 2 in a case in which an average value of heights of roughness projection apices of the first sliding face 11 is denoted by $\delta_A$ [$\mu$m], and an average value of heights of roughness projection apices of the second sliding face 21 is denoted by $\delta_B$ [$\mu$m]; $\sigma$ represents a value [$\mu$m] calculated according to the following formula 3 in a case in which a root mean square of the heights of the roughness projection apices of the first sliding face 11 is denoted by $\sigma_A$ [$\mu$m], and a root mean square of the heights of the roughness projection apices of the second sliding face 21 is denoted by $\sigma_B$ [$\mu$m]; $\eta$ represents a value [$\mu$m$^{-2}$] calculated according to the following formula 4 in a case in which a roughness projection density per unit area of the first sliding face 11 is denoted by $\eta_A$ [$\mu$m$^{-2}$], and a roughness projection density per unit area of the second sliding face 21 is denoted by $\eta_B$ [$\mu$m$^{-2}$]; $\beta$ represents a median [$\mu$m] of radius of curvature of roughness projections in an entirety of the first sliding face 11 and the second sliding face 21; and E* represents an equivalent longitudinal elastic modulus [GPa] of the first sliding face 11 and the second sliding face 21.

$$\delta = \delta_A + \delta_B \quad \cdots 2$$

$$\sigma = \sqrt{\sigma_A^2 + \sigma_B^2} \quad \cdots 3$$

$$\eta = \eta_A + \eta_B \quad \cdots 4$$

The upper limit of the roughness parameter $R_{ac}$ is preferably 0.185, and more preferably 0.141. When the roughness parameter $R_{ac}$ is greater than the upper limit, it may be difficult to inhibit a seizure between the first sliding face 11 and the second sliding face 21.

The lower limit of $\beta$ is not particularly limited, and may be, for example, greater than 51, may be greater than 55, and may be greater than 58. In the sliding member, the value of $\beta$ is likely to be increased in the case in which the first sliding face 11 manually polished. Even in such a case, the sliding member enables easy inhibition of a seizure between the first sliding face 11 and the second sliding face 21.

Meanwhile, the upper limit of $\beta$ is preferably 338, more preferably 330, and still more preferably 320. When $\beta$ is greater than the upper limit value, it may be difficult to inhibit a seizure between the first sliding face 11 and the second sliding face 21.

It is preferred that $\delta$ is less than or equal to 0.232, and $\sigma$ is less than or equal to 0.209. Setting $\delta$ and $\sigma$ to be less than or equal to the respective upper limit values enables easy inhibition of a seizure between the first sliding face 11 and the second sliding face 21. More specifically, the value of $\beta$ is increased when the first sliding face 11 is manually polished; as a result, the value of the roughness parameter $R_{ac}$ in the formula 1 is likely to be increased. Even in such a case, by controlling $\delta$ and $\sigma$ to be less than or equal to the respective upper limit values, the value of the roughness parameter $R_{ac}$ can be easily decreased. Thus, a seizure between the first sliding face 11 and the second sliding face 21 is easily inhibited.

The upper limit of $\delta$ is more preferably 0.181, and still more preferably 0.166. Meanwhile, the lower limit of $\delta$ is preferably 0.034, more preferably 0.040, and still more preferably 0.050. When $\delta$ is greater than the upper limit value, it may be difficult to inhibit a seizure between the first sliding face 11 and the second sliding face 21. Conversely, when $\delta$ is less than the lower limit value, polishing other than the manual polishing is further required, and thus the production cost of the sliding member may be increased.

The upper limit of $\sigma$ is more preferably 0.166, and still more preferably 0.130. The lower limit of $\sigma$ is preferably 0.052, more preferably 0.060, and still more preferably 0.070. When $\sigma$ is greater than the upper limit value, it may be difficult to inhibit a seizure between the first sliding face 11 and the second sliding face 21. Conversely, when $\sigma$ is less than the lower limit value, polishing other than the manual polishing is further required, and thus the production cost of the sliding member may be increased.

The first sliding face 11 and the second sliding face 21 differ in hardness. For example, the hardness of the first sliding face 11 may be higher than the hardness of the second sliding face 21. In the sliding member, since the first sliding face 11 and the second sliding face 21 differ in hardness, in a case in which the first sliding face 11 comes into contact with the second sliding face 21, microscopic projections on a surface having a higher hardness of these sliding faces are likely to be maintained. On the other hand, a surface having a lower hardness of the first sliding face 11 and the second sliding face 21 is easily plastically deformed due to rotational contact between the sliding faces. Hence, of the first sliding face 11 and the second sliding face 21, the sliding face having a lower hardness can be regarded as a surface having substantially the same level of roughness projections as the sliding face having a higher hardness, or as a mirror surface having substantially no roughness projection. In other words, in calculating the roughness parameter $R_{ac}$ according to the formula 1, the average value of the heights of the roughness projection apices, the root mean square of the heights of the roughness projection apices, and the roughness projection density per unit area of the sliding face having a lower hardness of the first sliding face 11 and the second sliding face 21 may be converted to values of the sliding face having a higher hardness, and these values may be converted to 0. Furthermore, $\beta$ may be converted to the median of radius of curvature of roughness projections on the sliding face having a higher hardness. By thus regarding, of the first sliding face 11 and the second sliding face 21, the sliding face having a lower hardness as a surface having the same level of roughness projections as the sliding face having a higher hardness, or as a mirror surface having no roughness projection, $R_{ac}$ in the formula 1 can be calculated more easily in consideration of future plastic deformation of the sliding face having a lower hardness. Furthermore, by thus calculating $R_{ac}$, an effect of inhibiting a seizure between the first sliding face 11 and the second sliding face 21 is easily obtained in a case in which, of the first sliding face 11 and the second sliding face 21, the sliding face having a higher hardness is manually polished. It is to be noted that the "hardness" as referred to herein means a Brinell hardness as defined in JIS-Z2243 (2018).

A difference in hardness between the first sliding face 11 and the second sliding face 21 is preferably large. The lower limit of the difference in hardness between the first sliding face 11 and the second sliding face 21 is preferably 100 HB, more preferably 130 HB, and still more preferably 150 HB.

Lubricating Liquid

The lubricating liquid 3 forms a lubricating film between the first sliding face 11 and the second sliding face 21 to increase slipperiness between the first sliding face 11 and the second sliding face 21. The lubricating liquid 3 is exemplified by a lubricating oil such as a paraffin base oil, seawater, and the like.

By forming the above-mentioned lubricating film, the lubricating liquid 3 facilitates maintaining a space between the first sliding face 11 and the second sliding face 21 in a fluid lubrication state. The fluid lubrication state between the first sliding face 11 and the second sliding face 21 enables inhibition of a seizure between the first sliding face 11 and the second sliding face 21. It is to be noted that the "fluid lubrication state" as referred to herein means a state of fluid lubrication which is sorted using a Stribeck curve.

Advantages

The sliding member enables inhibition of a seizure on the sliding face by controlling the roughness parameter $R_{ac}$ in the formula 1 to be less than or equal to the above value.

In the sliding member, for example, in a case in which the shaft member 1 is a crankshaft for ship, a crankpin is eccentric to a journal, and thus the dimension accuracy of the sliding face due to mechanical processing is likely to be insufficient. More specifically, for example, in a case in which the first sliding face 11 is provided on a peripheral face of the crankpin, manual polishing of the first sliding face 11 is likely to be required. The first sliding face 11 which has been manually polished may have an increased radius of curvature of roughness projections, and thus it may be likely that a seizure occurs on the first sliding face 11. In other words, in the case in which the shaft member 1 is a crankshaft for ship, the value of $\beta$ is likely to be increased. Even in such a case, in the sliding member, other roughness parameters such as $\delta$, $\sigma$, and the like are controlled such that the roughness parameter $R_{ac}$ in the formula 1 is less than or equal to the above value. Accordingly, even in the case in which the shaft member 1 is a crankshaft for ship, the sliding member enables appropriate inhibition of a seizure on the sliding face.

Production Method of Sliding Member

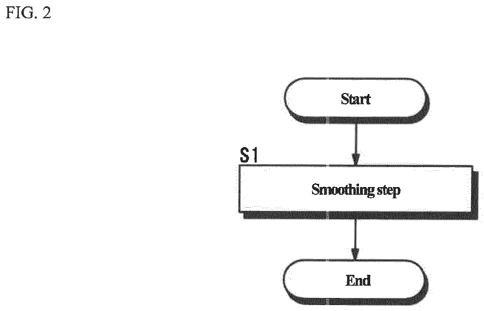

An example of a production method of the sliding member in FIG. 1 is described with reference to FIG. 2. The production method of the sliding member comprising: the shaft member 1 having the first sliding face 11; and the bearing member 2 having the second sliding face 21 which slidably supports the first sliding face 11, wherein the first sliding face 11 and the second sliding face 21 differ in hardness, comprises: a smoothing step S1 of smoothing, of the first sliding face 11 and the second sliding face 21, the sliding face having a higher hardness.

Smoothing Step

The smoothing step S1 is performed after the shaft member 1 and the bearing member 2 are formed by mechanical processing. The dimension accuracy of the shaft member 1 and the bearing member 2 after the mechanical processing may be insufficient, and thus manual polishing of the sliding face having a higher hardness of the first sliding face 11 and the second sliding face 21 (for example, the first sliding face 11 of the shaft member 1) may be required in order to improve the dimension accuracy. When the first sliding face 11 is manually polished, the radius of curvature of roughness projections on the first sliding face 11 is likely to be increased. More specifically, for example, in a case in which the value of $\beta$ after the mechanical processing is within a range of greater than or equal to 23.78 and less than or equal to 51.00, the value of $\beta$ after the manual polishing of the first sliding face 11 may be increased to be within a range of greater than or equal to 55.79 and less than or equal to 337.9. When the value of $\beta$ is increased in this way, the roughness parameter $R_{ac}$ calculated according to the formula 1 is increased, and therefore a seizure is likely to occur between the shaft member 1 and the bearing member 2. Thus, in the smoothing step S1, of the first sliding face 11 and the second sliding face 21, the sliding face having a higher hardness is smoothed such that the roughness parameter $R_{ac}$ calculated according to the formula 1 is less than or equal to 0.276. In other words, in the smoothing step S1, the values such as $\delta$, $\sigma$, and the like of the sliding face having a higher hardness of the first sliding face 11 and the second sliding face 21 are decreased such that the roughness parameter $R_{ac}$ is less than or equal to 0.276 even in the case in which the value of $\beta$ is large. In the smoothing step S1, the sliding face is preferably manually polished.

In the production method of a sliding member, since the first sliding face 11 and the second sliding face 21 differ in hardness, of the first sliding face 11 and the second sliding face 21, the sliding face having a lower hardness can be regarded as a surface having substantially the same level of roughness projections as the sliding face having a higher hardness, or as a mirror surface having substantially no roughness projection. In other words, in calculating the roughness parameter $R_{ac}$ according to the formula 1, the average value of the heights of the roughness projection apices, the root mean square of the heights of the roughness projection apices, and the roughness projection density per unit area of the sliding face having a lower hardness of the first sliding face 11 and the second sliding face 21 may be converted to values of the sliding face having a higher hardness, and these values may be converted to 0. Furthermore, $\beta$ may be converted to the median of radius of curvature of roughness projections on the sliding face having a higher hardness. By thus regarding, of the first sliding face 11 and the second sliding face 21, the sliding face having a lower hardness as a surface having the same level of roughness projections as the sliding face having a higher hardness, or as a mirror surface having no roughness projection, $R_{ac}$ in the formula 1 can be calculated more easily.

In the smoothing step S1, at least one of the first sliding face 11 and the second sliding face 21 is preferably polished such that the value of $\delta$ is less than or equal to 0.232 and the value of $\sigma$ is less than or equal to 0.209. By polishing at least one of the first sliding face 11 and the second sliding face 21 such that $\delta$ and $\sigma$ are less than or equal to the respective upper limit values, even in the case in which the value of $\beta$ is large, the value of the roughness parameter $R_{ac}$ can be easily decreased.

A method of smoothing at least one of the first sliding face 11 of the shaft member 1 and the second sliding face 21 is not particularly limited, and is exemplified by polishing of at least one of the first sliding face 11 and the second sliding face 21 with sandpaper, and the like.

In the case in which at least one of the first sliding face 11 and the second sliding face 21 is polished with sandpaper, for example, sandpaper having a roughness of greater than or equal to 240 mesh is preferably used. By thus using sandpaper of an appropriate mesh, the values of $\delta$ and $\sigma$ are easily controlled to be small, while the value of $\beta$ is likely to be increased. As a result, a seizure between the first sliding face 11 and the second sliding face 21 is easily inhibited.

Advantages

According to the production method of a sliding member, by controlling in the smoothing step S1, the roughness parameter $R_{ac}$ in the formula 1 to be less than or equal to the above value, a sliding member which enables inhibition of a seizure on a sliding face can be produced.

Evaluation Method of Sliding Member

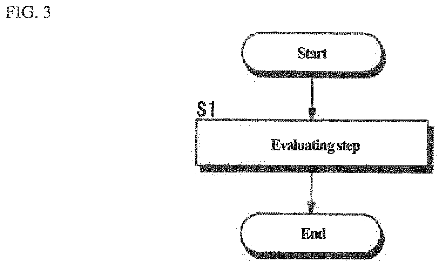

An example of an evaluation method of the sliding member is described with reference to FIG. 3. The evaluation method of the sliding member comprising: the shaft member having the first sliding face; and the bearing member having the second sliding face which slidably supports the first sliding face, comprises: an evaluating step S1 of evaluating a possibility of occurrence of a seizure between the first sliding face and the second sliding face based on a roughness parameter $R_{ac}$ calculated according to the following formula 1. The evaluation method is suitable for evaluating, whether a seizure occurs between the first sliding face 11 and the second sliding face 21 of the sliding member in FIG. 1. In the evaluating step S1, a case in which the roughness parameter $R_{ac}$ is less than or equal to a threshold value is evaluated as a low possibility of occurrence of the seizure; conversely, a case in which the roughness parameter $R_{ac}$ is greater than the threshold value is evaluated as a high possibility of occurrence of the seizure.

$$R_{ac} = \delta + 4\sigma - \left(\frac{20}{1.045\times10^{-4}\sigma^{-4.3}\beta^{1.5}\eta^{2}E^{*}}\right)^{0.147} \quad \cdot\cdot\cdot 1$$

In the formula 1, $\delta$ represents a value [$\mu$m] calculated according to the following formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to the following formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to the following formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face.

$$\delta = \delta_A + \delta_B \quad \cdot\cdot\cdot 2$$

$$\sigma = \sqrt{\sigma_A^2 + \sigma_B^2} \quad \cdot\cdot\cdot 3$$

$$\eta = \eta_A + \eta_B \quad \cdot\cdot\cdot 4$$

Evaluating Step

The evaluating step S1 is performed after the shaft member and the bearing member are formed by mechanical processing. Furthermore, the evaluating step S1 may be performed after the first sliding face is brought into rotational contact with the second sliding face to a certain degree.

The threshold value is preferably 0.276, more preferably 0.185, and still more preferably 0.141.

In the evaluating step S1, in calculating the roughness parameter $R_{ac}$ according to the formula 1, the average value of the heights of the roughness projection apices, the root mean square of the heights of the roughness projection apices, and the roughness projection density per unit area of the sliding face having a lower hardness of the first sliding face and the second sliding face may be converted to values of the sliding face having a higher hardness, and these values may be converted to 0. Furthermore, $\beta$ may be converted to the median of radius of curvature of roughness projections on the sliding face having a higher hardness. By thus regarding, of the first sliding face and the second sliding face, the sliding face having a lower hardness as a surface having the same level of roughness projections as the sliding face having a higher hardness, or as a mirror surface having no roughness projection, $R_{ac}$ in the formula 1 can be calculated more easily.

Advantages

According to the evaluation method of a sliding member, by evaluating in the evaluating step S1, the possibility of occurrence of a seizure between the first sliding face and the second sliding face based on the roughness parameter $R_{ac}$ in the formula 1, the possibility of occurrence of a seizure can be easily evaluated.

Other Embodiments

The above-described embodiment does not limit the configuration of the present invention. Therefore, in the above-described embodiment, the components of each part of the above-described embodiment can be omitted, replaced, or added based on the description in the present specification and general technical knowledge, and such omission, replacement, or addition should be construed as falling within the scope of the present invention.
For example, the sliding member may also adopt a configuration in which the lubricating liquid is not supplied between the first sliding face and the second sliding face.
Furthermore, in the sliding member, even in the case in which the first sliding face and the second sliding face differ in hardness, the roughness parameter $R_{ac}$ may be calculated based on the shapes of the roughness projections on the respective sliding faces.

EXAMPLES

Hereinafter, the present invention is described in detail by way of Examples; the present invention should not be construed as being limited to description in the Examples.
By fixing a shaft member and a bearing member to a bearing lifetime tester available from KOBELCO MACHINERY ENGINEERING Co., Ltd., it was confirmed whether a seizure occurred between the shaft member and the bearing member. In the bearing lifetime tester, in a case in which a sliding part of the shaft member with respect to the bearing member on an outer peripheral face of the shaft member is defined as a first sliding face, and a sliding part of the bearing member with respect to the shaft member on an inner peripheral face of the bearing member is defined as a second sliding face, the shaft member was rotated while the first sliding face of the shaft member was pressed against the second sliding face of the bearing member with a constant load. In rotating the shaft member, a lubricating oil was supplied to the first sliding face of the shaft member by circulation oil supply at a supply temperature of 70 °C. Furthermore, at this time, the temperature [°C] was measured with a thermocouple equipped at a depth of 2 mm from the second sliding face of the bearing member, and this temperature was determined as a temperature of the lubricating oil.

No. 1

In No. 1, the shaft member was rotated under the following conditions. A load of the shaft member applied to the bearing member was set to 10 kN. A rotation speed of the shaft member was set to 3,000 rpm at the start of the rotation of the shaft member, and was decreased by 250 rpm in each 5 minutes. The rotation of the shaft member was terminated when the rotation speed of the shaft member reached 0 rpm, or when a seizure occurred between the shaft member and the bearing member. Table 1 shows results of confirming whether a seizure occurred between the shaft member and the bearing member. It is to be noted that the roughness parameter $R_{ac}$ [μm] in Table 1 was calculated according to the formula 1 in such a manner that the average value of the heights of the roughness projection apices, the root mean square of the heights of the roughness projection apices, and the roughness projection density per unit area of the second sliding face were set to 0, and the median of radius of curvature of roughness projections in the entirety of the first sliding face and the second sliding face was converted to the median of radius of curvature of roughness projections on the first sliding face. Furthermore, an arithmetic mean roughness Ra [μm] and a protruding peak height Rpk [μm] in Table 1 are an arithmetic mean roughness Ra of the first sliding face as defined in JIS-B0601 (2013) and a protruding peak height Rpk of the first sliding face as defined in JIS-B0671-2 (2002), respectively. It is to be noted that the roughness parameter $R_{ac}$, the arithmetic mean roughness Ra, and the protruding peak height Rpk in Table 1 were determined by averaging values calculated through a plurality of measurements. Furthermore, an oil film thickness h [mm] at a time of occurrence of the seizure in Table 1 was calculated using the Ertel-Grubin equation represented by the following formula 9. Here, $\gamma$ [Pa·sec] represents a viscosity of the lubricating oil which is calculated from the temperature of the lubricating oil at the time of occurrence of the seizure; R [m] represents an equivalent radius calculated according to the following formula 10 from a radius $R_1$ of the shaft member and a radius $R_2$ of the bearing member; $\alpha$ [1/GPa] represents a viscosity-pressure coefficient of the lubricating oil; u [m/sec] represents a peripheral speed of the shaft member which is calculated from the rotation speed of the shaft member; and w [N/m] represents a load per unit contact length in a bearing width direction, the load per unit being determined by dividing the load of the shaft member applied to the bearing member by the bearing width. In the Examples, $\alpha$ was set to 0.02 to calculate the oil film thickness h at the time of occurrence of the seizure. The calculation methods of the roughness parameter $R_{ac}$ and the oil film thickness h at the time of occurrence of the seizure were similarly applied to No. 2 to No. 8 described later.

$$h = 1.95R\left(\alpha\frac{\gamma u}{R}\right)^{0.73}\left(\frac{w}{ER}\right)^{-0.09} \times 10^3 \qquad \cdots 9$$

$$R = \frac{R_2 R_1}{R_2 - R_1} \qquad \cdots 10$$

Shaft member

In No. 1, carbon steel S45C as defined in JIS-G4051 (2016), which has a Young's modulus of 210,000 MPa, a Poisson's ratio of 0.3, a shaft diameter of the first sliding face of 39.96 mm, and a hardness of approximately 172 HB, was used as the shaft member. In No. 1, the first sliding face was manually polished after mechanical processing to adjust, for the first sliding face, the average value of the heights of the roughness projection apices to 0.074 $\mu$m, the root mean square of the heights of the roughness projection apices to 0.078 $\mu$m, the radius of curvature of roughness projections to 60.91 $\mu$m, and the roughness projection density per unit area to 0.0134 $\mu$m$^{-2}$. It is to be noted that the average value of the heights of the roughness projection apices, the root mean square of the heights of the roughness projection apices, the radius of curvature of roughness projections, and the roughness projection density per unit area of the first sliding face were determined by averaging values calculated through a plurality of measurements. The calculation methods of the average value of the heights of the roughness projection apices, the root mean square of the heights of the roughness projection apices, the radius of curvature of roughness projections, and the roughness projection density per unit area of the first sliding face were similarly applied to No. 2 to No. 8 described later.

Bearing member

In No. 1, white metal WJ2 as defined in JIS-H5401 (1958), which has a Young's modulus of 55,000 MPa, a Poisson's ratio of 0.33, a diameter of the second sliding face of 40.2 mm, a bearing width of 35 mm, and a hardness of approximately 27 HB, was used as the bearing member.

Lubricating oil

In No. 1, "FBK oil RO32", available from ENEOS Corporation, which has a kinetic viscosity at 40 °C of 32.1 mm$^2$/sec and a density at 15 °C of 0.871 g/cm$^3$, was used as the lubricating oil.

No. 2

In No. 2, the shaft member was rotated under the following conditions using a shaft member below, a bearing member similar to that in No. 1, and a lubricating oil similar to that in No. 1. A load of the shaft member applied to the bearing member was set to 10 kN. The rotation speed of the shaft member was set to 3,000 rpm at the start of the rotation of the shaft member, and was decreased by 100 rpm in each 5 minutes. After the rotation speed of the shaft member reached less than or equal to 300 rpm, the rotation speed of the shaft member was decreased by 50 rpm in each 5 minutes. The rotation of the shaft member was terminated when the rotation speed of the shaft member reached 0 rpm, or when a seizure occurred between the shaft member and the bearing member. Table 1 shows results of confirming whether a seizure occurred between the shaft member and the bearing member.

Shaft member

In No. 2, the first sliding face was manually polished after mechanical processing to adjust, for the first sliding face, the average value of the heights of the roughness projection apices to 0.166 $\mu$m, the root mean square of the heights of the roughness projection apices to 0.130 $\mu$m, the radius of curvature of roughness projections to 17.88 $\mu$m, and the roughness projection density per unit area to 0.0158 $\mu$m$^{-2}$. In terms of the other points, the configuration was similar to that of the shaft member in No. 1.

No. 3

In No. 3, the first sliding face was manually polished after mechanical processing to adjust, for the first sliding face, the average value of the heights of the roughness projection apices to 0.181 $\mu$m, the root mean square of the heights of the roughness projection apices to 0.166 $\mu$m, the radius of curvature of roughness projections to 29.53 $\mu$m, and the roughness projection density per unit area to 0.0096 $\mu$m$^{-2}$. In terms of the other points, the configuration was similar to that of No. 1, and the shaft member was rotated under conditions similar to those in No. 1. Table 1 shows results of confirming whether a seizure occurred.

No. 4

In No. 4, the first sliding face was manually polished after mechanical processing to adjust, for the first sliding face, the average value of the heights of the roughness projection apices to 0.232 $\mu$m, the root mean square of the heights of the roughness projection apices to 0.209 $\mu$m, the radius of curvature of roughness projections to 18.78 $\mu$m, and the roughness projection density per unit area to 0.0119 $\mu$m$^{-2}$. In terms of the other points, the configuration was similar to that of No. 2, and the shaft member was rotated under conditions similar to those in No. 2. Table 1 shows results of confirming whether a seizure occurred.

No. 5

In No. 5, the first sliding face was manually polished after mechanical processing; the configuration was similar to that of No. 2 except that, for the first sliding face, the average value of the heights of the roughness projection apices was set to 0.272 $\mu$m, the root mean square of the heights of the roughness projection apices was set to 0.203 $\mu$m, the radius of curvature of roughness projections was set to 16.20 $\mu$m, and the roughness projection density per unit area was set to 0.0121 $\mu$m$^{-2}$, and the shaft member was rotated under conditions similar to those in No. 2. Table 1 shows results of confirming whether a seizure occurred.

No. 6

In No. 6, the first sliding face was manually polished after mechanical processing; the configuration was similar to that of No. 2 except that, for the first sliding face, the average value of the heights of the roughness projection apices was set to 0.544 $\mu$m, the root mean square of the heights of the roughness projection apices was set to 0.320 $\mu$m, the radius of curvature of roughness projections was set to 9.40 $\mu$m, and the roughness projection density per unit area was set to 0.0075 $\mu$m$^{-2}$, and the shaft member was rotated under conditions similar to those in No. 2. Table 1 shows results of confirming whether a seizure occurred.

No. 7

In No. 7, the first sliding face was manually polished after mechanical processing; the configuration was similar to that of No. 2 except that, for the first sliding face, the average value of the heights of the roughness projection apices was set to 0.634 $\mu$m, the root mean square of the heights of the roughness projection apices was set to 0.298 $\mu$m, the radius of curvature of roughness projections was set to 13.94 $\mu$m, and the roughness projection density per unit area was set to 0.0049 $\mu$m$^{-2}$, and the shaft member was rotated under conditions similar to those in No. 2. Table 1 shows results of confirming whether a seizure occurred.

No. 8

In No. 8, the first sliding face was manually polished after mechanical processing; the configuration was similar to that of No. 1 except that, for the first sliding face, the average value of the heights of the roughness projection apices was set to 0.460 $\mu$m, the root mean square of the heights of the roughness projection apices was set to 0.534 $\mu$m, the radius of

curvature of roughness projections was set to 18.94 $\mu$m, and the roughness projection density per unit area was set to 0.0055 $\mu$m$^{-2}$, and the shaft member was rotated under conditions similar to those in No. 1. Table 1 shows results of confirming whether a seizure occurred.

Table 1

|  | No. 1 | No. 2 | No. 3 | No. 4 | No. 5 | No. 6 | No. 7 | No. 8 |
|---|---|---|---|---|---|---|---|---|
| Roughness parameter $R_{ac}$ [$\mu$m] | 0.067 | 0.141 | 0.185 | 0.276 | 0.283 | 0.439 | 0.452 | 0.795 |
| Arithmetic mean roughness Ra [$\mu$m] | 0.091 | 0.153 | 0.202 | 0.231 | 0.266 | 0.475 | 0.569 | 0.488 |
| Protruding peak height Rpk [$\mu$m] | 0.097 | 0.202 | 0.186 | 0.238 | 0.231 | 0.235 | 0.248 | 0.809 |
| Seizure occurred? | No | No | No | No | Yes | Yes | Yes | Yes |
| Rotation speed at time of occurrence of seizure [rpm] | - | - | - | - | 270 | 500 | 500 | 500 |
| Temperature at time of occurrence of seizure [°C] | - | - | - | - | 71.5 | 78.7 | 73.5 | 93.7 |
| Oil film thickness h at time of occurrence of seizure [mm] | - | - | - | - | 0.326 | 0.441 | 0.491 | 0.771 |

As seen from Table 1, a seizure is inhibited in No. 1 to No. 4 in which the roughness parameter $R_{ac}$ is less than or equal to 0.276. Furthermore, the roughness parameter $R_{ac}$ is positively correlated with the oil film thickness h at the time of occurrence of the seizure. The correlation between the roughness parameter $R_{ac}$ and the oil film thickness h at the time of occurrence of the seizure is higher than a correlation between the arithmetic mean roughness Ra and the oil film thickness h at the time of occurrence of the seizure and a correlation between the protruding peak height Rpk and the oil film thickness h at the time of occurrence of the seizure. This indicates that the roughness parameter $R_{ac}$ is a parameter suitable for evaluating the likelihood of occurrence of a seizure.

It is to be noted that in the Examples, the carbon steel and the white metal WJ2 were used as the shaft member and the bearing member, respectively; however, it is considered that, for example, also in a case in which carbon steel S45C and an Al-Sn alloy are used as the shaft member and the bearing member, respectively, a seizure can be inhibited by satisfying the roughness parameter $R_{ac}$ of less than or equal to 0.276. A reason for this is as follows: the hardness after annealing of the carbon steel S45C as defined in JIS-G4051 (2016) is typically greater than or equal to 137 HB and less than or equal to 170 HB, whereas as defined in Table 2 of ISO 3547-4, the hardness of AlSn6Cu is greater than or equal to 35 HB and less than or equal to 45 HB and the hardness of AlSn20Cu is greater than or equal to 30 HB and less than or equal to 45 HB, and thus a difference in hardness between the carbon steel S45C and the Al-Sn alloy is approximately 100 HB. That is to say, the difference in hardness between the carbon steel S45C and the Al-Sn alloy is a value close to the difference in hardness between the carbon steel S45C and the white metal WJ2 in the Examples, and thus it is considered that $R_{ac}$ which is determined only by the roughness characteristics and material properties of the sliding faces also has a similar value.

INDUSTRIAL APPLICABILITY

The sliding member according to the one aspect of the present invention enables inhibition of a seizure on the sliding face; thus, the sliding member can be applied to, for example, a crankshaft, an intermediate shaft, a propulsion shaft, and the like for ship.

Explanation of the Reference Symbols

1 Shaft member
11 First sliding face
2 Bearing member
21 Second sliding face
3 Lubricating liquid
d Shaft diameter of first sliding face

**Claims**

1. A sliding member comprising:

   a shaft member having a first sliding face; and
   a bearing member having a second sliding face which slidably supports the first sliding face, wherein,
   the shaft member is a rotating body which is configured to rotate in a circumferential direction with respect to the bearing member,
   the first sliding face and the second sliding face differ in hardness,
   the sliding member being **characterized in that**
   a roughness parameter $R_{ac}$ calculated according to formula 1 is less than or equal to 0.276,

$$R_{ac} = \delta + 4\sigma - \left(\frac{20}{1.045 \times 10^{-4}\sigma^{-4.3}\beta^{1.5}\eta^2 E^*}\right)^{0.147} \quad \cdots 1$$

   wherein, in the formula 1, $\delta$ represents a value [$\mu$m] calculated according to formula 2 in a case in which an average value of heights of roughness projection apices of the first sliding face is denoted by $\delta_A$, [$\mu$m], and an average value of heights of roughness projection apices of the second sliding face is denoted by $\delta_B$ [$\mu$m]; $\sigma$ represents a value [$\mu$m] calculated according to formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to formula 4 in a case in which a roughness projection density per unit area of the first sliding face is denoted by $\eta_A$ $\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and $E^*$ represents an equivalent longitudinal elastic modulus [GPa] of the first sliding face and the second sliding face,

$$\delta = \delta_A + \delta_B \quad \cdots 2$$

$$\sigma = \sqrt{\sigma_A^2 + \sigma_B^2} \quad \cdots 3$$

$$\eta = \eta_A + \eta_B \quad \cdots 4$$

   wherein $\delta_A$, $\delta_B$, $\sigma_A$, $\sigma_B$, $\eta_A$, $\eta_B$, and $\beta$ are determined as indicated in the description.

2. The sliding member according to claim 1, wherein the roughness parameter $R_{ac}$ is calculated in such a manner that, of the first sliding face and the second sliding face, a sliding face having a lower hardness is defined as a mirror surface having no roughness projection.

3. The sliding member according to claim 1 or 2, wherein a lubricating liquid is supplied between the first sliding face and the second sliding face.

4. The sliding member according to any one of claims 1 to 3, wherein a shaft diameter of the first sliding face of the shaft member is greater than or equal to 180 mm.

5. The sliding member according to any one of claims 1 to 4, wherein

   $\delta$ is less than or equal to 0.232, and
   $\sigma$ is less than or equal to 0.209.

6. A production method of a sliding member comprising: a shaft member having a first sliding face; and a bearing member having a second sliding face which slidably supports the first sliding face, wherein the shaft member is a rotating body which rotates in a circumferential direction with respect to the bearing member and the first sliding face and the second sliding face differ in hardness, the production method comprising:

measuring the roughness curve of the sliding surfaces according to JIS-B0601 (2013); and
smoothing, of the first sliding face and the second sliding face, a sliding face having a higher hardness such that a roughness parameter $R_{ac}$ calculated according to formula 1 is less than or equal to 0.276,

$$R_{ac} = \delta + 4\sigma - \left(\frac{20}{1.045 \times 10^{-4} \sigma^{-4.3} \beta^{1.5} \eta^2 E^*}\right)^{0.147} \quad \cdots 1$$

wherein, in the formula 1, $\delta$ represents a value [$\mu$m] calculated according to formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face,

$$\delta = \delta_A + \delta_B \quad \cdots 2$$

$$\sigma = \sqrt{\sigma_A^2 + \sigma_B^2} \quad \cdots 3$$

$$\eta = \eta_A + \eta_B \quad \cdots 4$$

wherein $\delta_A$, $\delta_B$, $\sigma_A$, $\sigma_B$, $\eta_A$, $\eta_B$, and $\beta$ are determined as indicated in the description.

7. An evaluation method of a sliding member comprising: a shaft member having a first sliding face; and a bearing member having a second sliding face which slidably supports the first sliding face, wherein the shaft member is a rotating body which rotates in a circumferential direction with respect to the bearing member, the evaluation method comprising:

measuring the roughness curve of the sliding surfaces according to JIS-B0601 (2013); and
evaluating a possibility of occurrence of a seizure between the first sliding face and the second sliding face based on a roughness parameter $R_{ac}$ calculated according to formula 1,

$$R_{ac} = \delta + 4\sigma - \left(\frac{20}{1.045 \times 10^{-4} \sigma^{-4.3} \beta^{1.5} \eta^2 E^*}\right)^{0.147} \quad \cdots 1$$

wherein, in the formula 1, $\delta$ represents a value [$\mu$m] calculated according to formula 2 in a case in which an average value of heights of roughness projection apices of the first sliding face is denoted by $\delta_A$ [$\mu$m], and an average value of heights of roughness projection apices of the second sliding face is denoted by $\delta_B$ [$\mu$m]; $\sigma$ represents a value [$\mu$m] calculated according to formula 3 in a case in which a root mean square of the heights of the roughness projection apices of the first sliding face is denoted by $\sigma_A$ [$\mu$m], and a root mean square of the heights of the roughness projection apices of the second sliding face is denoted by $\sigma_B$ [$\mu$m]; $\eta$ represents a value [$\mu$m$^{-2}$] calculated according to formula 4 in a case in which a roughness projection density per unit area of the first sliding face is denoted by $\eta_A$ [$\mu$m$^{-2}$], and a roughness projection density per unit area of the second sliding face is denoted by $\eta_B$ [$\mu$m$^{-2}$]; $\beta$ represents a median [$\mu$m] of radius of curvature of roughness projections in an entirety of the first sliding face and the second sliding face; and E* represents an equivalent longitudinal elastic modulus [GPa] of the first sliding face and the second sliding face,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

,

wherein a case in which the roughness parameter $R_{ac}$ is less than or equal to a threshold value is evaluated as a low possibility of occurrence of the seizure,
wherein the threshold value is 0.276, and
wherein $\delta_A$, $\delta_B$, $\sigma_A$, $\sigma_B$, $\eta_A$, $\eta_B$, and $\beta$ are determined as indicated in the description.

**Patentansprüche**

1. Gleitelement, umfassend:

   ein Schaftelement mit einer ersten Gleitfläche; und
   ein Lagerelement mit einer zweiten Gleitfläche, die die erste Gleitfläche gleitend stützt, wobei
   das Schaftelement ein rotierender Körper ist, der konfiguriert ist, um sich in einer Umfangsrichtung in Bezug auf das Lagerelement zu drehen,
   sich die erste Gleitfläche und die zweite Gleitfläche in ihrer Härte unterscheiden, das Gleitelement **dadurch gekennzeichnet ist, dass**
   ein Rauheitsparameter $R_{ac}$, berechnet gemäß Formel 1, kleiner als oder gleich 0,276 ist,

$$R_{ac} = \delta + 4\sigma - \left(\frac{20}{1.045 \times 10^{-4} \sigma^{-4.3} \beta^{1.5} \eta^2 E^*}\right)^{0.147} \qquad \cdots 1$$

   wobei, in der Formel 1, $\delta$ einen Wert [$\mu$m] darstellt, der gemäß Formel 2 berechnet wird, in einem Fall, in dem ein Durchschnittswert der Höhen von Rauheitsvorsprungsspitzen der ersten Gleitfläche durch $\delta_A$ [$\mu$m] bezeichnet wird und ein Durchschnittswert der Höhen von Rauheitsvorsprungsspitzen der zweiten Gleitfläche durch $\delta_B$ [$\mu$m] bezeichnet wird; $\sigma$ einen Wert [$\mu$m] darstellt, der gemäß Formel 3 berechnet wird, in einem Fall, in dem ein quadratischer Mittelwert der Höhen der Rauheitsvorsprungsspitzen der ersten Gleitfläche durch $\sigma_A$ [$\mu$m] bezeichnet wird und ein quadratischer Mittelwert der Höhen der Rauheitsvorsprungsspitzen der zweiten Gleit-fläche durch $\sigma_B$ [$\mu$m] bezeichnet wird; $\eta$ einen Wert [$\mu$m$^{-2}$] darstellt, der gemäß Formel 4 berechnet wird, in einem Fall, in dem eine Rauheitsvorsprungsdichte pro Flächeneinheit der ersten Gleitfläche durch $\eta_A$ [$\mu$m$^{-2}$] bezeichnet wird und eine Rauheitsvorsprungsdichte pro Flächeneinheit der zweiten Gleitfläche durch $\eta_B$ [$\mu$m$^{-2}$] bezeichnet wird; $\beta$ einen mittleren Radius [$\mu$m] der Krümmung der Rauheitsvorsprünge in einer Gesamtheit der ersten Gleitfläche und der zweiten Gleitfläche darstellt; und $E^*$ ein äquivalentes Längselastizitätsmodul [GPa] der ersten Gleitfläche und der zweiten Gleitfläche darstellt,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

   wobei $\delta_A$, $\delta_B$, $\sigma_A$, $\sigma_B$, $\eta_A$, $\eta_B$ und $\beta$ wie in der Beschreibung angegeben bestimmt werden.

2. Gleitelement gemäß Anspruch 1, wobei der Rauheitsparameter $R_{ac}$ derart berechnet wird, dass von der ersten Gleitfläche und der zweiten Gleitfläche eine Gleitfläche mit einer geringeren Härte als eine Spiegeloberfläche ohne Rauheitsvorsprung definiert wird.

3. Gleitelement gemäß Anspruch 1 oder 2, wobei eine Schmierflüssigkeit zwischen die erste Gleitfläche und die zweite Gleitfläche zugeführt wird.

4. Gleitelement gemäß einem der Ansprüche 1 bis 3, wobei ein Schaftdurchmesser der ersten Gleitfläche des Schaftelements größer als oder gleich 180 mm ist.

5. Gleitelement gemäß einem der Ansprüche 1 bis 4, wobei

$\delta$ kleiner als oder gleich 0,232 ist, und
$\sigma$ kleiner als oder gleich 0,209 ist.

6. Herstellungsverfahren eines Gleitelements, umfassend: ein Schaftelement mit einer ersten Gleitfläche; und ein Lagerelement mit einer zweiten Gleitfläche, die die erste Gleitfläche gleitend stützt, wobei das Schaftelement ein rotierender Körper ist, der sich in einer Umfangsrichtung in Bezug auf das Lagerelement dreht, und sich die erste Gleitfläche und die zweite Gleitfläche in ihrer Härte unterscheiden, wobei das Herstellungsverfahren umfasst:

Messen der Rauheitskurve der Gleitflächen gemäß JIS-B0601 (2013); und
von der ersten Gleitfläche und der zweiten Gleitfläche, Glätten einer Gleitfläche mit einer höheren Härte, sodass ein Rauheitsparameter $R_{ac}$, berechnet gemäß Formel 1, kleiner als oder gleich 0,276 ist,

$$R_{ac} = \delta + 4\sigma - \left(\frac{20}{1.045\times10^{-4}\sigma^{-4.3}\beta^{1.5}\eta^2 E^*}\right)^{0.147} \quad \cdots 1$$

wobei, in der Formel 1, $\delta$ einen Wert [$\mu$m] darstellt, der gemäß Formel 2 berechnet wird, in einem Fall, in dem ein Durchschnittswert der Höhen von Rauheitsvorsprungsspitzen der ersten Gleitfläche durch $\delta_A$ [$\mu$m] bezeichnet wird und ein Durchschnittswert der Höhen von Rauheitsvorsprungsspitzen der zweiten Gleitfläche durch $\delta_B$ [$\mu$m] bezeichnet wird; $\sigma$ einen Wert [$\mu$m] darstellt, der gemäß Formel 3 berechnet wird, in einem Fall, in dem ein quadratischer Mittelwert der Höhen der Rauheitsvorsprungsspitzen der ersten Gleitfläche durch $\sigma_A$ [$\mu$m] bezeichnet wird und ein quadratischer Mittelwert der Höhen der Rauheitsvorsprungsspitzen der zweiten Gleitfläche durch $\sigma_B$ [$\mu$m] bezeichnet wird; $\eta$ einen Wert [$\mu$m$^{-2}$] darstellt, der gemäß Formel 4 berechnet wird, in einem Fall, in dem eine Rauheitsvorsprungsdichte pro Flächeneinheit der ersten Gleitfläche durch $\eta_A$ [$\mu$m$^{-2}$] bezeichnet wird und eine Rauheitsvorsprungsdichte pro Flächeneinheit der zweiten Gleitfläche durch $\eta_B$ [$\mu$m$^{-2}$] bezeichnet wird; $\beta$ einen mittleren Radius [$\mu$m] der Krümmung der Rauheitsvorsprünge in einer Gesamtheit der ersten Gleitfläche und der zweiten Gleitfläche darstellt; und $E^*$ ein äquivalentes Längselastizitätsmodul [GPa] der ersten Gleitfläche und der zweiten Gleitfläche darstellt,

$$\delta = \delta_A + \delta_B \quad \cdots 2$$

$$\sigma = \sqrt{\sigma_A^2 + \sigma_B^2} \quad \cdots 3$$

$$\eta = \eta_A + \eta_B \quad \cdots 4$$

wobei $\delta_A$, $\delta_B$, $\sigma_A$, $\sigma_B$, $\eta_A$, $\eta_B$ und $\beta$ wie in der Beschreibung angegeben bestimmt werden.

7. Bewertungsverfahren eines Gleitelements, umfassend: ein Schaftelement mit einer ersten Gleitfläche; und ein Lagerelement mit einer zweiten Gleitfläche, die die erste Gleitfläche gleitend stützt, wobei das Schaftelement ein rotierender Körper ist, der sich in einer Umfangsrichtung in Bezug auf das Lagerelement dreht, wobei das Bewertungsverfahren umfasst:

Messen der Rauheitskurve der Gleitflächen gemäß JIS-B0601 (2013); und Bewerten einer Wahrscheinlichkeit des Auftretens eines Eingriffs zwischen der ersten Gleitfläche und der zweiten Gleitfläche basierend auf einem Rauheitsparameter $R_{ac}$, der gemäß Formel 1 berechnet wird,

$$R_{ac} = \delta + 4\sigma - \left(\frac{20}{1.045 \times 10^{-4}\sigma^{-4.3}\beta^{1.5}\eta^2 E^*}\right)^{0.147} \quad \cdots 1$$

wobei, in der Formel 1, $\delta$ einen Wert [$\mu$m] darstellt, der gemäß Formel 2 berechnet wird, in einem Fall, in dem ein Durchschnittswert der Höhen von Rauheitsvorsprungsspitzen der ersten Gleitfläche durch $\delta_A$ [$\mu$m] bezeichnet wird und ein Durchschnittswert der Höhen von Rauheitsvorsprungsspitzen der zweiten Gleitfläche durch $\delta_B$ [$\mu$m] bezeichnet wird; $\sigma$ einen Wert [$\mu$m] darstellt, der gemäß Formel 3 berechnet wird, in einem Fall, in dem ein quadratischer Mittelwert der Höhen der Rauheitsvorsprungsspitzen der ersten Gleitfläche durch $\sigma_A$ [$\mu$m] bezeichnet wird und ein quadratischer Mittelwert der Höhen der Rauheitsvorsprungsspitzen der zweiten Gleit-fläche durch $\sigma_B$ [$\mu$m] bezeichnet wird; $\eta$ einen Wert [$\mu$m$^{-2}$] darstellt, der gemäß Formel 4 berechnet wird, in einem Fall, in dem eine Rauheitsvorsprungsdichte pro Flächeneinheit der ersten Gleitfläche durch $\eta_A$ [$\mu$m$^{-2}$] bezeichnet wird und eine Rauheitsvorsprungsdichte pro Flächeneinheit der zweiten Gleitfläche durch $\eta_B$ [$\mu$m$^{-2}$] bezeichnet wird; $\beta$ einen mittleren Radius [$\mu$m] der Krümmung der Rauheitsvorsprünge in einer Gesamtheit der ersten Gleitfläche und der zweiten Gleitfläche darstellt; und E* ein äquivalentes Längselastizitätsmodul [GPa] der ersten Gleitfläche und der zweiten Gleitfläche darstellt,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

wobei ein Fall, in dem der Rauheitsparameter $R_{ac}$ kleiner als oder gleich einem Schwellenwert ist, als eine geringe Wahrscheinlichkeit des Auftretens des Eingriffs bewertet wird,
wobei der Schwellenwert 0,276 beträgt, und
wobei $\delta_A$, $\delta_B$, $\sigma_A$, $\sigma_B$, $\eta_A$, $\eta_B$ und $\beta$ wie in der Beschreibung angegeben bestimmt werden.

**Revendications**

1. Élément coulissant comprenant :

   un élément d'arbre ayant une première face coulissante ; et
   un élément de palier ayant une seconde face coulissante qui supporte de manière coulissante la première face coulissante, dans lequel l'élément d'arbre est un corps rotatif qui est configuré pour tourner dans une direction circonférentielle par rapport à l'élément de palier,
   la première face coulissante et la seconde face coulissante diffèrent en termes de dureté,
   l'élément coulissant étant **caractérisé en ce que**
   un paramètre de rugosité $R_{ac}$ calculé selon la formule 1 est inférieur ou égal à 0,276,

   $$R_{ac} = \delta + 4\sigma - \left(\frac{20}{1.045 \times 10^{-4}\sigma^{-4.3}\beta^{1.5}\eta^2 E^*}\right)^{0.147} \quad \cdots 1$$

   dans laquelle, dans la formule 1, $\delta$ représente une valeur [$\mu$m] calculée selon la formule 2 dans un cas où une valeur moyenne de hauteurs de sommets de projection de rugosité de la première face coulissante est désignée par $\delta_A$ [$\mu$m], et une valeur moyenne de hauteurs de sommets de projection de rugosité de la seconde face coulissante est désignée par $\delta_B$ [$\mu$m] ; $\sigma$ représente une valeur [$\mu$m] calculée selon la formule 3 dans un cas où une moyenne quadratique des hauteurs des sommets de projection de rugosité de la première face coulissante est désignée par $\sigma_A$ [$\mu$m], et une moyenne quadratique des hauteurs des sommets de projection de rugosité de la seconde face coulissante est désignée par $\sigma_B$ [$\mu$m] ; $\eta$ représente une valeur [$\mu$m$^{-2}$] calculée selon la formule 4 dans un cas où une densité de projection de rugosité par surface unitaire de la première face coulissante est

désignée par $\eta_A$ [$\mu$m$^{-2}$], et une densité de projection de rugosité par surface unitaire de la seconde face coulissante est désignée par $\eta_B$ [$\mu$m$^{-2}$] ; $\beta$ représente une médiane [$\mu$m] de rayon de courbure de projections de rugosité dans une entièreté de la première face coulissante et la seconde face coulissante ; et E* représente un module élastique longitudinal équivalent [GPa] de la première face coulissante et la seconde face coulissante,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4 \quad,$$

dans lesquelles $\delta_A$, $\delta_B$, $\sigma_A$, $\sigma_B$, $\eta_A$, $\eta_B$ et $\beta$ sont déterminés tel qu'indiqué dans la description.

2. Élément coulissant selon la revendication 1, dans lequel le paramètre de rugosité $R_{ac}$ est calculé de telle sorte que, parmi la première face coulissante et la seconde face coulissante, une face coulissante ayant une dureté inférieure est définie comme une surface miroir n'ayant aucune projection de rugosité.

3. Élément coulissant selon la revendication 1 ou 2, dans lequel un liquide lubrifiant est fourni entre la première face coulissante et la seconde face coulissante.

4. Élément coulissant selon l'une quelconque des revendications 1 à 3, dans lequel un diamètre d'arbre de la première face coulissante de l'élément d'arbre est supérieur ou égal à 180 mm.

5. Élément coulissant selon l'une quelconque des revendications 1 à 4, dans lequel $\delta$ est inférieur ou égal à 0,232, et $\sigma$ est inférieur ou égal à 0,209.

6. Procédé de production d'un élément coulissant comprenant : un élément d'arbre ayant une première face coulissante ; et un élément de palier ayant une seconde face coulissante qui supporte de manière coulissante la première face coulissante, dans lequel l'élément d'arbre est un corps rotatif qui tourne dans une direction circonférentielle par rapport à l'élément de palier, la première face coulissante et la seconde face coulissante diffèrent en termes de dureté, le procédé de production comprenant :

mesurer la courbe de rugosité des surfaces coulissantes conformément à JIS-B0601 (2013) ; et lisser, parmi la première face coulissante et la seconde face coulissante, une face coulissante ayant une dureté supérieure de sorte qu'un paramètre de rugosité $R_{ac}$ calculé selon la formule 1 est inférieur ou égal à 0,276,

$$R_{ac} = \delta + 4\sigma - \left(\frac{20}{1,045 \times 10^{-4}\sigma^{-4,3}\beta^{1,5}\eta^2 E^*}\right)^{0,147} \qquad \cdots 1$$

dans laquelle, dans la formule 1, $\delta$ représente une valeur [$\mu$m] calculée selon la formule 2 dans un cas où une valeur moyenne de hauteurs de sommets de projection de rugosité de la première face coulissante est désignée par $\delta_A$ [$\mu$m], et une valeur moyenne de hauteurs de sommets de projection de rugosité de la seconde face coulissante est désignée par $\delta_B$ [$\mu$m] ; $\sigma$ représente une valeur [$\mu$m] calculée selon la formule 3 dans un cas où une moyenne quadratique des hauteurs des sommets de projection de rugosité de la première face coulissante est désignée par $\sigma_A$ [$\mu$m], et une moyenne quadratique des hauteurs des sommets de projection de rugosité de la seconde face coulissante est désignée par $\sigma_B$ [$\mu$m] ; $\eta$ représente une valeur [$\mu$m$^{-2}$] calculée selon la formule 4 dans un cas où une densité de projection de rugosité par surface unitaire de la première face coulissante est désignée par $\eta_A$ [$\mu$m$^{-2}$], et une densité de projection de rugosité par surface unitaire de la seconde face coulissante est désignée par $\eta_B$ [$\mu$m$^{-2}$] ; $\beta$ représente une médiane [$\mu$m] de rayon de courbure de projections de rugosité dans une entièreté de la première face coulissante et la seconde face coulissante ; et E* représente un module élastique longitudinal équivalent [GPa] de la première face coulissante et la seconde face coulissante,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

,

dans lesquelles $\delta_A$, $\delta_B$, $\sigma_A$, $\sigma_B$, $\eta_A$, $\eta_B$ et $\beta$ sont déterminés tel qu'indiqué dans la description.

7. Procédé d'évaluation d'un élément coulissant comprenant : un élément d'arbre ayant une première face coulissante ; et un élément de palier ayant une seconde face coulissante qui supporte de manière coulissante la première face coulissante, dans lequel l'élément d'arbre est un corps rotatif qui tourne dans une direction circonférentielle par rapport à l'élément de palier, le procédé d'évaluation comprenant :

mesurer la courbe de rugosité des surfaces coulissantes conformément à JIS-B0601 (2013) ; et
évaluer une possibilité d'occurrence d'un grippage entre la première face coulissante et la seconde face coulissante en fonction d'un paramètre de rugosité $R_{ac}$ calculé selon la formule 1,

$$R_{ac} = \delta + 4\sigma - \left( \frac{20}{1.045 \times 10^{-4} \sigma^{-4.3} \beta^{1.5} \eta^2 E^*} \right)^{0.147} \qquad \cdots 1$$

dans laquelle, dans la formule 1, $\delta$ représente une valeur [$\mu$m] calculée selon la formule 2 dans un cas où une valeur moyenne de hauteurs de sommets de projection de rugosité de la première face coulissante est désignée par $\delta_A$ [$\mu$m], et une valeur moyenne de hauteurs de sommets de projection de rugosité de la seconde face coulissante est désignée par $\delta_B$ [$\mu$m] ; $\sigma$ représente une valeur [$\mu$m] calculée selon la formule 3 dans un cas où une moyenne quadratique des hauteurs des sommets de projection de rugosité de la première face coulissante est désignée par $\sigma_A$ [$\mu$m], et une moyenne quadratique des hauteurs des sommets de projection de rugosité de la seconde face coulissante est désignée par $\sigma_B$ [$\mu$m] ; $\eta$ représente une valeur [$\mu$m$^{-2}$] calculée selon la formule 4 dans un cas où une densité de projection de rugosité par surface unitaire de la première face coulissante est désignée par $\eta_A$ [$\mu$m$^{-2}$], et une densité de projection de rugosité par surface unitaire de la seconde face coulissante est désignée par $\eta_B$ [$\mu$m$^{-2}$] ; $\beta$ représente une médiane [$\mu$m] de rayon de courbure de projections de rugosité dans une entièreté de la première face coulissante et la seconde face coulissante ; et E* représente un module élastique longitudinal équivalent [GPa] de la première face coulissante et la seconde face coulissante,

$$\delta = \delta_A + \delta_B \qquad \cdots 2$$

$$\sigma = \sqrt{\sigma_A^2 + \sigma_B^2} \qquad \cdots 3$$

$$\eta = \eta_A + \eta_B \qquad \cdots 4$$

,

dans lequel un cas où le paramètre de rugosité $R_{ac}$ est inférieur ou égal à une valeur seuil est évalué en tant que faible possibilité d'occurrence du grippage,
dans lequel la valeur seuil est de 0,276, et
dans lesquelles $\delta_A$, $\delta_B$, $\sigma_A$, $\sigma_B$, $\eta_A$, $\eta_B$ et $\beta$ sont déterminés tel qu'indiqué dans la description.

FIG. 1

FIG. 2

FIG. 3

```
            ┌──────────────┐
            │    Start      │
            └──────┬───────┘
                   │
                   ▼
  S1   ┌───────────────────────┐
       │    Evaluating step    │
       └───────────┬───────────┘
                   │
                   ▼
            ┌──────────────┐
            │     End       │
            └──────────────┘
```

**EP 4 102 087 B1**

**Patent documents cited in the description**

- JP 2004116707 A

- EP 3767119 A1